# EUROPÄISCHE PATENTSCHRIFT

(11) **EP 1 285 547 B1**
(45) Veröffentlichungstag und Bekanntmachung des Hinweises auf die Patenterteilung: **18.07.2007**
(21) Anmeldenummer: 01943112.1
(22) Anmeldetag: 17.05.2001
(51) Int. Cl.: H04Q 7/22

(54) **VERFAHREN UND SYSTEM ZUM ANMELDEN EINER TEILNEHMER-STATION AN DER PAKETDIENST-DIENSTEZUSTANDS-STEUERFUNKTION CSCF IN EINEM KOMMUNIKATIONSSYSTEM**
METHOD AND SYSTEM FOR LOGGING A SUBSCRIBER STATION ONTO THE PACKET SERVICE-SERVICE STATE CONTROL FUNCTION CSCF IN A COMMUNICATIONS SYSTEM
PROCEDE ET SYSTEME POUR ANNONCER UNE STATION ABONNEE A LA FONCTION DE GESTION D'ETAT DE SERVICE CSCF DE SERVICE PAR PAQUETS DANS UN SYSTEME DE COMMUNICATION

(30) Priorität: 22.05.2000 DE 10025270
(43) Veröffentlichungstag der Anmeldung: 26.02.2003
(73) Patentinhaber: SIEMENS AKTIENGESELLSCHAFT, 80333 München (DE)
(72) Erfinder: ENGMANN, Steffen, 80333 München (DE); FÖLL, Uwe, 14612 Falkensee (DE); HASS, Elmar, 82008 Unterhaching (DE); JASPER, Ralf, 10407 Berlin (DE)
(86) Internationale Anmeldenummer: PCT/DE2001/001890
(87) Internationale Veröffentlichungsnummer: WO 2001/091483

(56) Entgegenhaltungen:
- WO-A-99/37103
- WO-A-99/63773
- 3GPP: "3rd Generation Partnership Project;Technical Specification Group Services and System Aspects;Architecture Principles for Release 2000." 3G TR 23.821 V1.0.1, - Juli 2000 (2000-07) XP002175634 Sophia Antipolis,France.
- ANTONELLA NAPOLITANO,GIUSEPPE RICAGNI: "UMTS all-IP mobility Management,Call and session control Procedures" INTERNET DRAFT, [Online] - 24. März 2000 (2000-03-24) Seiten 1-23, XP002149519 Gefunden im Internet: <URL:http://195.103.28.224/ricagni/draft-r icagni-megaco-umts-all-ip-00.pdfCSCF> [gefunden am 2001-09-14]
- PLASSE DELPHINE: "Call Control Scenarios in the all-IP UMTS Core Network" IEEE INTERNATIONAL SYMPOSIUM ON PERSONAL, INDOOR AND MOBILE RADIO COMMUNICATIONS, XX, XX, Bd. 1, 18. September 2000 (2000-09-18), Seiten 322-326, XP002165603

## Beschreibung

Die Erfindung betrifft ein Verfahren zum Anmelden einer Station an der Verbindungszustands- und/oder Dienstezustands-Steuerfunktion CSCF in einem paketorientierten Kommunikationssystems gemäß dem Oberbegriff des Patentanspruchs 1 und ein Kommunikationssystem zum Durchführen des Verfahrens gemäß dem Oberbegriff des Patentanspruchs 8.

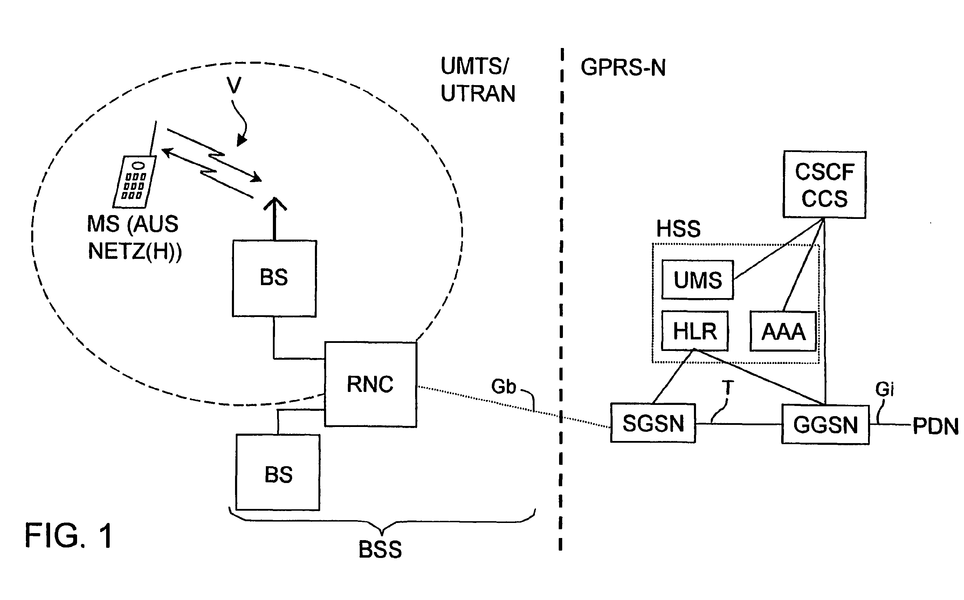

In bestehende Mobilfunknetze nach dem GSM-Standard werden derzeit neuartige Datendienste wie der Paketdatendienst GPRS (General Packet Radio Service) eingeführt Siehe auch WO 9 963 773 A. Die Übertragung im Mobilfunknetz findet hierbei nicht verbindungsorientiert bzw. nicht leitungsvermittelt, sondern in Form von Paketdaten statt. Diese Art der Übertragung nutzt die gegebenen Übertragungsressourcen im Mobilfunknetz besser aus. Die Architektur für den Paketdatendienst geht davon aus (siehe auch Fig. 1), dass das vom Teilnehmer benutzte stationäre oder mobile Daten- oder Kommunikationsendgerät, z.B. eine Mobilstation, an ihrem jeweiligen Aufenthaltsort von einem Dienstenetzknoten (SGSN: Serving GPRS Support Node) bedient wird. Um Paketdaten zu empfangen oder zu senden, ist der Zugang zu einem Paketdatennetz notwendig. Zu diesem Zweck werden Zugangsnetzknoten (GGSN: Gateway GPRS Support Nodes) bereitgestellt, die jeweils den Zugang zu dem Paketdatennetz, z.B. dem Internet, realisieren und ein bestimmtes Paketdatenprotokoll, z.B. das Internet Protokoll (IP), unterstützen. Zwischen dem Dienstenetzknoten und dem Zugangsnetzknoten ist im Mobilfunknetz ein Tunnel vorgesehen, über den die Pakete übertragen werden.

Insbesondere für Kommunikationssysteme der dritten Generation - z.B. dem UMTS (Universal Mobile Telecommunication System) - ist eine Architektur für IP-basierte Mobilfunk-Netze vorgesehen, die eine Erweiterung der existierenden GPRS-Architektur aufweist, um Verbindungssteuerungs- und Dienstesteuerungs- bzw. Call Control-Komponenten bereitzustellen. Eine der wesentlichen neuen Komponenten ist dafür eine Verbindungszustands- und Dienstezustands-Steuerfunktion CSCF (Call State Control Function). Diese Funktion übernimmt u.a. die bisher von Mobilvermittlungsstellen (MSC: Mobile service Switching Center) ausgeführten Verbindungssteuerungs- bzw. Call Control-Funktionen. Die Verbindungszustands- und Dienstezustandsfunktion CSCF dient somit insbesondere auch als Verbindungssteuerinstanz für Multimedia-Dienste im paketvermittelnden bzw. IP-basierten Kernnetz. Die Bestimmung der für einen Ruf zuständigen Verbindungszustands- und Dienstezustandsfunktion CSCF erfolgt dabei datenendstations-spezifisch bzw. teilnehmer-spezifisch, d.h. sie wird vom öffentlichen Heimat-Mobilkommunikationsnetz des Teilnehmers HPLMN vorgegeben.

Das Anmelden von Datenendgeräten oder mobilen Teilnehmerstationen an der Registrierungseinrichtung, z.B. des Paketdatennetzes des derzeit in Aufbau befindlichen 3GPP-Standards (3GPP: 3rd Generation Partnership Project), erfolgt in Stufen an zwei Instanzen im Netz. Die erste Instanz ist der Paketdatendienst GPRS, wobei die Prozeduren für das 3GPP-System (GPRS Attach und PDP Context Activation) bereits beschrieben und standardisiert sind. Die zweite Instanz ist die Verbindungszustands- und Dienstezustandsfunktion. Zum Anmelden an der Verbindungszustands- und Dienstezustandsfunktion CSCF muss der Teilnehmer authentifiziert und autorisiert werden, d.h. seine Identität und seine Zugriffsberechtigung(en) werden überprüft.

Der bisherige Standard sieht derzeit jedoch noch keine Prozeduren für die Auswahl der Verbindungszustands- und Dienstezustandsfunktion CSCF sowie die Autorisierung und Authentifizierung eines über ein beliebiges IP-Protokoll, z.B. SIP (Session Initiation Protocol), kommunizierenden Teilnehmers bzw. einer Datenstation an der Verbindungszustands- und Dienstezustandsfunktion CSCF vor, d.h. einen Teilnehmer anzumelden und dessen Berechtigung zu prüfen. Diese Prozeduren sind für ein sicheres Betreiben von z.B. paketorientierten 3GPP-Systemen jedoch unbedingt erforderlich.

Die Aufgabe der Erfindung besteht darin, ein Verfahren zum Anmelden einer Station an der Verbindungszustands- und/oder Dienstezustands-Steuerfunktion in einem paketorientierten Kommunikationssystems bzw. ein Kommunikationssystem zum Durchführen des Verfahrens vorzuschlagen.

Diese Aufgabe wird durch das Verfahren mit den Merkmalen des Patentanspruchs 1 bzw. das Kommunikationssystem gemäß den Merkmalen des Patentanspruchs 8 gelöst.

Vorteilhafte Ausgestaltungen sind Gegenstand von abhängigen Ansprüchen.

Das Verfahren bzw. das Kommunikationssystem bieten durch das Übertragen der Identifizierungsinformation eine einfache Möglichkeit, eine Datenendeinrichtung bzw. Station an der Verbindungszustands- und Dienstezustandsfunktion eines Paketdatennetzes zu Authentifizieren und zu Autorisieren.

Als Identifizierungsinformation die internationale Mobil-Teilnehmer-Identität bzw. -Nummer zu übermitteln, bietet eine besonders einfache Lösung, da diese bereits für alle Stationen individuell zugeteilt ist und somit keine spezielle Identifizierungsinformation neu einzuführen ist.

Nachfolgend von der Verbindungszustands- und Dienstezustands-Steuerfunktion eine der Identifizierungsinformation entsprechende Zugriffsanforderung an eine Einrichtung und/oder Funktion zur Berechtigungsfreigabe und/oder Gebührenerfassung zu übermitteln, bietet die einfache Möglichkeit, eine bereits vorgesehene Einrichtung bzw. Funktion für die Authentifizierung / Autorisierung zu verwenden.

Daraufhin mit der Station Daten zur Authentifizierung und/oder Autorisierung der Station auszutauschen, ermöglicht eine direkte Anforderung konkreter Daten, die von der Station ohne die Zwischenschaltung unnötig vieler Einrichtungen lieferbar sind.

Die Einrichtung bzw. Funktion zur Gebührenerfassung nach dem Empfang der erforderlichen Daten zur Authentifizierung und/oder Autorisierung eine der Identifizierungsinformation entsprechende Zugriffsbestätigung an die Verbindungszustands- und Dienstezustands-Steuerfunktion übermitteln zu lassen, ermöglicht eine direkte Freigabebestätigung an die Verbindungszustands- und Dienstezustands-Steuerfunktion.

Mit der Zugriffsbestätigung oder zusätzlich zu dieser an die Verbindungszustands- und Dienstezustands-Steuerfunktion eine Information über Berechtigungen und/oder Beschränkungen der Berechtigung zu übermitteln, bietet die Möglichkeit für die anfragende Station nur bestimmte Ressourcen freizugeben. Beschränkungen können beispielsweise hinsichtlich des Radius oder Durchmessers des momentanen Aufenthaltsort auferlegt werden.

Nach der Authentifizierung und/oder Autorisierung der Station bei der Verbindungszustands- und Dienstezustands-Steuerfunktion können das Einbuchen und der Verbindungsaufbau in üblicher Art und Weise fortgesetzt werden. Es müssen keine weiteren Funktionen oder Einrichtungen angepasst oder eingeführt werden.

Nach erfolgtem Einbuchen in der Verbindungszustands- und Dienstezustands-Steuerfunktion kann die Station MS bzw. das Terminal beliebige Verbindungen aufbauen, insbesondere Verbindungen über beliebige Internet-Protokoll-Telephonieprotokolle.

Bei dem entsprechenden Kommunikationssystem ist die Funktion zur Bereitstellung von Teilnehmerdaten zur Gebührenerfassung vorteilhafterweise dem Heimat-Teilnehmer-Server untergeordnet, dem auch das Heimatortsregister HLR und der Teilnehmer-Mobilitäts-Server untergeordnet sein können. Die Gebührenerfassung selber erfolgt vorteilhafterweise in der Verbindungszustands- und Dienstezustands-Steuerfunktion.

Ein Ausführungsbeispiel wird nachfolgend anhand der Zeichnung näher erläutert. Es zeigen:
- Fig. 1: ein schematisches Funk-Kommunikationssystem mit einer Schnittstelle zu einem Paketdatendienst und
- Fig.2: ein Ablaufschema für den Verbindungsaufbau beim Einbuchen einer Funkstation in ein Kommunikationsnetz.

Das in Fig. 1 dargestellte Kommunikationssystem zeigt ein Funk-Kommunikationsnetz mit Einrichtungen, die einen Paketdatendienst GPRS ermöglichen. Als Beispiel für eine stationäre oder mobile Kommunikationsendeinrichtung ist eine mobile Station MS eines mobilen Teilnehmers dargestellt, die über eine Luftschnittstelle V mit Einrichtungen eines terrestrischen UMTS-Funknetzes UTRAN (UMTS Terrestrial Radio Access Network) bzw. dessen Basisstationssystems BSS mit ortsfesten Basisstationen BS, Basisstationssteuerungen und Funknetz-Steuereinrichtungen RNC drahtlos gekoppelt ist.

Die Verbindung zu einem paketorientierten Kommunikationsnetz GPRS-N, erfolgt seitens des UMTS-Funknetzes über die Funknetz-Steuereinrichtung RNC.

Zur Übertragung von Paketdaten zwischen der mobilen Station MS und einem Paketdatennetz PDN weist das Kommunikationsnetz GPRS-N einen oder mehrere Dienstenetzknoten SGSN und zumindest einen damit in Verbindung stehenden Zugangsnetzknoten GGSN auf. Der Zugangsnetzknoten GGSN ist dabei über eine Schnittstelle Gi mit dem eigentlichen oder einem fremden Paketdatennetz PDN verbunden, während der Dienstenetzknoten SGSN an das Basisstationssystem BSS über eine Schnittstelle Gb angeschlossen ist. Mit anderen Worten, das Kommunikationssystem weist eine GPRS-Paketdatennetz-Architektur mit IPbasiertem Paketdatennetz GPRS-N und ein funkseitiges UMTS-Funknetz UTRAN für die Kommunikation mit mobilen und stationären Funk-Stationen MS auf. Im Dienstenetzknoten SGSN befindet sich ein Packet-Relay, das die Schnittstelle Gb zum Basisstationssystem BSS auf die Schnittstelle T zum Zugangsnetzknoten GGSN abbildet und die Datenpakete in beiden Richtungen weiterleitet.

Für den Paketdatendienst GPRS existiert zunächst keine Verbindung zu Paketdatendienst-Netzeinrichtungen oder einem Paketdaten-Zugangsnetz. Um einen Dienst zu nutzen, muss sich der mobile Teilnehmer bislang in einem ersten Schritt im Netz anmelden. Bei dieser Gelegenheit werden seine Identität und Berechtigungen hinsichtlich des allgemeinen Zugriffs auf den Datendienst GPRS überprüft. Im zweiten Schritt muß ein Paketdatenprotokoll aktiviert werden. Das Paketdatendienst-Netz GPRS-N stellt daraufhin z.B. einen Tunnel T zwischen dem zuständigen Dienstenetzknoten SGSN und dem gewünschten Zugangsnetzknoten GGSN zum Paketdatennetz PDN bereit. Danach können über diesen Tunnel T Pakete zwischen dem Teilnehmer bzw. der mobilen Station MS und dem fremden Paketdatennetz PDN ausgetauscht werden.

Beim nachfolgend beschriebenen Ausführungsbeispiel wird die Verwaltung und Übertragung von Daten zumindest teilweise von einer Verbindungszustands- und Dienstezustands-Steuerfunktion CSCF im Verbindungssteuerungs-Server CCS (Call Control Server) unterstützt oder gesteuert. Der Verbindungssteuerungs-Server CCS ist bei den derzeit geplanten Systemen dritter Generation mit dem Zugangsnetzknoten GGSN verbunden. Jedoch sind auch andere Verbindungen und Protokolle verwendbar.

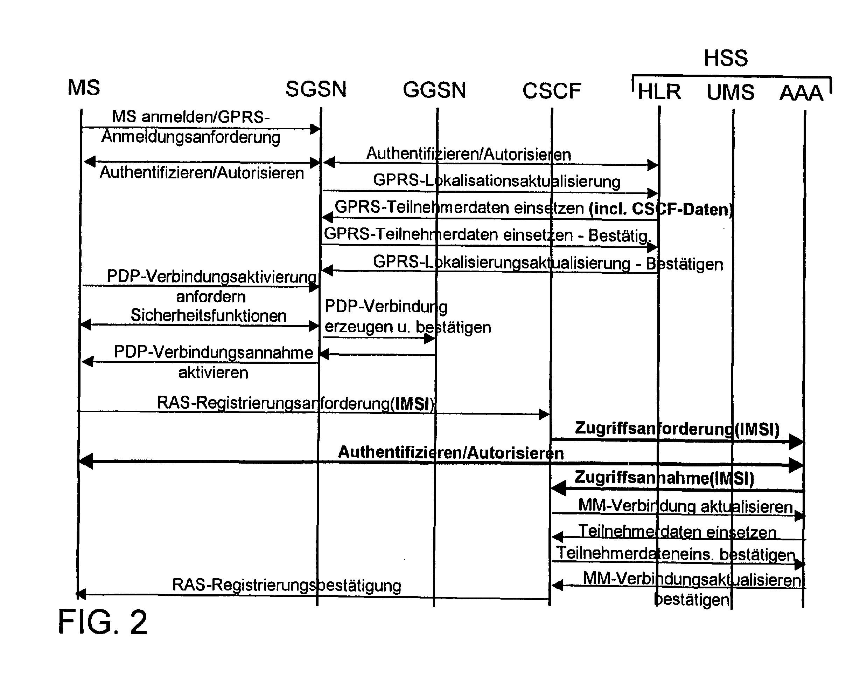

In Fig. 2 ist ein beispielhafter Verbindungsaufbau zwischen einer verbindungsorientierten Station MS und dem Paketdatennetz GPRS-N skizziert. Die mobile Station MS bucht sich dabei z.B. in das Paketdatennetz PDN ein. Dabei wird von der Station MS in einem ersten Verfahrensschritt ein Verbindungsaufbau bei einem Funk-Kommunikationsnetz UMTS/UTRAN, in dessen Bereich sich die Station MS befindet, angefordert und an den Dienstenetzknoten SGSN weitergeleitet "MS anmelden/GPRS-Anmeldungsanforderung". Die Zwischenschritte von der Station MS zum Dienstenetzknoten SGSN werden nachfolgend nicht näher beschrieben.

Danach findet eine Authentifizierung zwischen mobiler Station MS und Dienstenetzknoten SGSN bzw. zwischen Dienstenetzknoten SGSN und Heimatregister HLR statt. Daraufhin werden der momentane Aufenthaltsort bzw. die Lokalisierung der mobilen Station MS und das Einsetzen der Teilnehmerdaten zwischen Dienstenetzknoten SGSN und Heimatregister HLR in bekannter Art und Weise durchgeführt. Es folgen die Anforderung einer Paketdatendienst-Verbindung durch die mobile Station MS an den Dienstenetzknoten SGSN und der Austausch von Sicherheitsinformationen zwischen diesen. Daraufhin erzeugen und bestätigen der Dienstenetzknoten SGSN und der Zugangsnetzknoten GGSN eine Paketdatenverbindung über den Tunnel T, so dass der mobilen Station MS eine Verbindung zum Paketdatennetz PDN bereitgestellt ist. Entsprechend wird der mobilen Station MS von dem Dienstenetzknoten SGSN mitgeteilt, dass die Paketdatenverbindung aktivierbar ist.

Im nächsten Schritt fordert die mobile Station MS eine Registrierung an einem entfernten Zugriffsserver (RAS/Remote Access Server) als Teil der Verbindungszustands- und Dienstezustands-Steuerfunktion CSCF an, und zwar gemäß dem vorliegenden Ausführungsbeispiel durch Übermitteln der eigenen internationalen Mobil-Teilnehmer-Identität bzw. -Nummer IMSI an die Verbindungszustands- und Dienstezustands-Steuerfunktion CSCF. Die Information welche Verbindungszustands- und Dienstezustands-Steuerfunktion CSCF anzusprechen ist, wird zuvor von dem Heimatregister HLR beim Schritt des Einsetzens der GPRS-Teilnehmerdaten mit übertragen.

Von der Verbindungszustands- und Dienstezustands-Steuerfunktion CSCF wird nun eine der internationalen Mobil-Teilnehmer-Identität IMSI entsprechende Zugriffsanforderung an eine Einrichtung bzw. Funktion zur Gebührenerfassung in Abhängigkeit der Authentifikation und der Autorisation AAA (Authentication Authorization Accounting) übermittelt. Anstelle oder zugleich mit der Einrichtung bzw. Funktion zur Gebührenerfassung sollte auch eine Einrichtung bzw. Funktion zur Berechtigungsfreigabe einbezogen werden.

Daraufhin findet über die Verbindungszustands- und Dienstezustands-Steuerfunktion CSCF ein direkter oder indirekter Informationsaustausch zwischen der Einrichtung zur Autorisierung/ Authentifizierung AAA und der mobilen Station MS statt, in dem die erforderlichen Daten ausgetauscht werden, die eine Authentifizierung und eine Autorisierung der mobilen Station MS bei der Einrichtung zur Autorisierung/ Authentifizierung AAA ermöglichen.

Nach dem Empfang der erforderlichen Daten sendet die Einrichtung bzw. Funktion zur Autorisierung/ Authentifizierung AAA eine der internationalen Mobil-Teilnehmer-Identität IMSI entsprechende Zugriffsannahme bzw. Zugriffsbestätigung an die Verbindungszustands- und Dienstezustands-Steuerfunktion CSCF. Der Verbindungszustands- und Dienstezustands-Steuerfunktion CSCF werden somit die Authentifikation und Autorisation der Teilnehmer-Station MS bestätigt.

Daraufhin kann die Verbindungszustands- und Dienstezustands-Steuerfunktion CSCF in für sich bekannter Art und Weise mit dem Teilnehmermobilitätsserver UMS (User Mobility Server) die Mobilitäts-Management-(MM)-Verbindung aktualisieren und Teilnehmerdaten einsetzen lassen. Abschließend erfolgt von der Verbindungszustands- und Dienstezustands-Steuerfunktion CSCF eine Bestätigung der Registrierung am entfernten Zugriffsserver an die Station MS.

Bei dieser Art der Registrierung einer Station MS an der Verbindungszustands- und Dienstezustands-Steuerfunktion CSCF wird insbesondere in der RAS-Registrierungsanforderungs-Nachricht eine Identifizierungsinformation mitgeben, welche die Authentifizierung der Station MS ermöglicht. Der Heimat-Teilnehmer-Server HSS (Home Subscriber Server) umfasst vorteilhafterweise die Funktion AAA zur Autorisierung, Authentifizierung und optional zur Gebührenerfassung, das Heimatortsregister HLR und den Teilnehmer-Mobilitäts-Server UMS. Diese Funktion AAA zur Gebührenerfassung kann dann eine zusätzliche Anfrage an die Station MS erforderlich machen, z.B. eine GSM-Authentifizierung/Autorisierung oder eine Nachfrage beim Dienstenetzknoten SGSN des Paketdatendienstes GPRS, ob dieser Teilnehmer bzw. diese Station MS schon über den Paketdatendienst GPRS authentifiziert/autorisiert ist. Nach erfolgreicher Authentifizierung kann die weitere Prozedur, insbesondere UMTS-Prozedur, zwischen Heimat-Teilnehmer-Server HSS und Verbindungszustands- und Dienstezustands-Steuerfunktion CSCF erfolgen. Nach erfolgtem Einbuchen in der Verbindungszustands- und Dienstezustands-Steuerfunktion CSCF kann die Station MS bzw. das Terminal beliebige Verbindungen aufbauen, insbesondere Verbindungen über beliebige Internet-Protokoll-Telephonieprotokolle.

## Patentansprüche

1. Verfahren zum Anmelden einer Station (MS) an der Verbindungszustands- und/oder Dienstezustands-Steuerfunktion (CSCF) eines paketorientierten Kommunikationssystems (UMTS/GPRS),
- wobei die Station (MS) eine Registrierung an einem entfernten Zugriffsserver (RAS) der Verbindungszustands- und/oder Dienstezustands-Steuerfunktion (CSCF) anfordert,
**dadurch gekennzeichnet,**
- **dass** bei der Anforderung der Registrierung am entfernten Zugriffsserver (RAS) eine Identifizierungsinformation (IMSI) mitgeben wird, welche die Authentifizierung und/oder Autorisierung der Station (MS) ermöglicht.

2. Verfahren nach Anspruch 1, bei dem
als Identifizierungsinformation (IMSI) eine internationale Mobil-Teilnehmer-Identität oder -Nummer (IMSI) übermittelt wird.

3. Verfahren nach Anspruch 1 oder 2, bei dem
nachfolgend von der Verbindungszustands- und Dienstezustands-Steuerfunktion (CSCF) eine der Identifizierungsinformation (IMSI) entsprechende Zugriffsanforderung an eine Einrichtung und/oder Funktion zur Berechtigungsfreigabe und/oder Gebührenerfassung (AAA) übermittelt wird.

4. Verfahren nach einem vorstehenden Anspruch, bei dem daraufhin mit der Station (MS) Daten zur Authentifizierung und/oder Autorisierung der Station (MS) ausgetauscht werden.

5. Verfahren nach Anspruch 3, bei dem
die Einrichtung bzw. Funktion zur Gebührenerfassung (AAA) nach dem Empfang der erforderlichen Daten zur Authentifizierung und/oder Autorisierung der Station (MS) eine der Identifizierungsinformation (IMSI) entsprechende Zugriffsbestätigung an die Verbindungszustands- und Dienstezustands-Steuerfunktion (CSCF) übermittelt.

6. Verfahren nach Anspruch 5, bei dem
mit der Zugriffsbestätigung oder zusätzlich zu dieser an die Verbindungszustands- und Dienstezustands-Steuerfunktion (CSCF) eine Information über die Berechtigung und/oder Beschränkungen der Berechtigung übermittelt wird.

7. Verfahren nach einem vorstehenden Anspruch, bei dem
nach der Authentifizierung und/oder Autorisierung der Station (MS) bei der Verbindungszustands- und Dienstezustands-Steuerfunktion (CSCF) das Einbuchen und der Verbindungsaufbau fortgesetzt werden.

8. Kommunikationssystem, zum Durchführen der einzelnen Schritte des Verfahrens nach einem der vorstehenden Ansprüche, mit
- einem zumindest teilweise paketorientierten Kommunikationsnetz (UMTS/GPRS),
- zumindest einer Station (MS), die über eine Schnittstelle (V) mit dem Kommunikationsnetz (UMTS) kommunizieren kann,
- zumindest einer Verbindungszustands- und/oder Dienstezustands-Steuerfunktion (CSCF) des paketorientierten Teils (GPRS) des Kommunikationssystems zum Steuern zumindest eines Teils von Diensten bei einer Verbindung der Station (MS) mit einem Paketdatennetz (PDN) über die Schnittstelle (V),
**gekennzeichnet durch**
- eine Einrichtung (HSS) zum Authentifizieren und/oder Autorisieren der Station (MS) bei der Verbindungszustands- und/oder Dienstezustands-Steuerfunktion (CSCF) in Abhängigkeit von einer beim Anfordern der Registrierung an einem entfernten Zugriffsserver (RAS) übertragenen Identifizierungsinformation (IMSI).

9. Kommunikationssystem nach Anspruch 8, bei dem
die Einrichtung (HSS) zum Authentifizieren und/oder Autorisieren mit der Verbindungszustands- und/oder Dienstezustands-Steuerfunktion (CSCF) direkt in Verbindung steht.

10. Kommunikationssystem nach Anspruch 8 oder 9, bei dem die Einrichtung (HSS) zum Authentifizieren und/oder Autorisieren eine Funktion zur Gebührenerfassung aufweist.

## Claims

1. Method for registering a station (MS) on the Call State Control Function (CSCF) of a packet-oriented communications system (UMTS/GPRS),
- whereby the station (MS) requests a registration on a remote access server (RAS) of the Call State Control Function (CSCF),
**characterized in that**
- the request for registration on the remote access server (RAS) includes identification information (IMSI) which enables authentication and/or authorization of the station (MS).

2. Method according to Claim 1, in which
an international mobile subscriber identity or number (IMSI) is transferred as identification information (IMSI).

3. Method according to Claim 1 or 2, in which,
from the Call State Control Function (CSCF), an access request corresponding to the identification information (IMSI) is then transferred to a device and/or function for authorization release and/or charge recording (AAA).

4. Method according to a preceding claim, in which
data for authentication and/or authorization of the station (MS) are then exchanged with the station (MS).

5. Method according to Claim 3, in which,
once the required data for authentication and/or authorization of the station (MS) have been received, the charge-metering device or function (AAA) transfers an access confirmation corresponding to the identification information (IMSI) to the Call State Control Function (CSCF).

6. Method according to Claim 5, in which
information relating to the authorization and/or restrictions of the authorization is transferred along with, or in addition to, the access confirmation to the Call State Control Function (CSCF).

7. Method according to a preceding claim, in which
the registration and connection set-up are continued following the authentication and/or authorization of the station (MS) in the Call State Control Function (CSCF).

8. Communications system, to carry out the individual steps of the method according to one of the preceding claims, with
- an at least partially packet-oriented communications network (UMTS/GPRS),
- at least one station (MS) which can communicate via an interface (V) with the communications network (UMTS)
- at least one Call State Control Function (CSCF) of the packet-oriented part (GPRS) of the communications system to control at least some services in a connection of the station (MS) with a packet data network (PDN) via the interface (V),
**characterized by**
- a device (HSS) for authentication and/or authorization of the station (MS) in the Call State Control Function (CSCF) depending on identification information (IMSI) transmitted during the request for registration on a remote access server (RAS).

9. Communications system according to Claim 8, in which
the device (HSS) for authentication and/or authorization is directly connected to the Call State Control Function (CSCF).

10. Communications system according to Claim 8 or 9, in which
the device (HSS) for authentication and/or authorization has a charge-metering function.

## Revendications

1. Procédé pour annoncer une station (MS) à la fonction de commande d'état de liaison et/ou d'état de service (CSCF) d'un système de communication orienté paquet (UMTS/GPRS),
- la station (MS) demandant un enregistrement à un serveur d'accès (RAS) éloigné de la fonction de commande d'état de liaison et/ou d'état de service (CSCF),
**caractérisé en ce que**
- lors de la demande d'enregistrement sur le serveur d'accès (RAS) éloigné, on donne une information d'identification (IMSI) qui permet l'authentification et/ou l'autorisation de la station (MS).

2. Procédé selon la revendication 1, dans lequel une identité ou un numéro international d'abonné du service mobile (IMSI) est transmis comme information d'identification (IMSI).

3. Procédé selon la revendication 1 ou 2, dans lequel, à la suite de la fonction de commande d'état de liaison et d'état de service (CSCF), une fonction d'accès correspondant à l'information d'identification (IMSI) est transmise à un dispositif et/ou une fonction pour la validation d'autorisation et/ou la taxation (AAA).

4. Procédé selon la revendication précédente, dans lequel les données pour l'authentification et/ou l'autorisation de la station (MS) sont échangées ensuite avec la station (MS).

5. Procédé selon la revendication 3, dans lequel le dispositif ou la fonction pour la taxation (AAA) transmet après la réception des données indispensables pour l'authentification et/ou l'autorisation de la station (MS) une confirmation d'accès correspondant à l'information d'identification (IMSI) à la fonction de commande d'état de liaison et d'état de service (CSCF).

6. Procédé selon la revendication 5, dans lequel une information concernant l'autorisation et/ou des restrictions de l'autorisation est transmise avec la confirmation d'accès ou en supplément de celle-ci à la fonction de commande d'état de liaison et d'état de service (CSCF).

7. Procédé selon une revendication précédente, dans lequel, après l'authentification et/ou l'autorisation de la station (MS), l'enregistrement et l'établissement de liaison sont poursuivis auprès de la fonction de commande d'état de liaison et d'état de service (CSCF).

8. Système de communication, pour la mise en oeuvre des étapes individuelles du procédé selon l'une quelconque des revendications précédentes, avec
- un réseau de communication (UMTS/GPRS) au moins partiellement orienté paquet,
- au moins une station (MS), qui peut communiquer par une interface (V) avec le réseau de communication (UMTS),
- au moins une fonction de commande d'état de liaison et/ou d'état de service (CSCF) de la partie orientée paquet (GPRS) du système de communication pour la gestion d'au moins une partie de services lors d'une liaison de la station (MS) avec un réseau de données de paquet (PDN) par l'interface (V),
**caractérisé par**
- un dispositif (HSS) pour l'authentification et/ou l'autorisation de la station (MS) lors de la fonction de commande d'état de liaison et/ou d'état de service (CSCF) en fonction d'une information d'identification (IMSI) transmise lors de la demande d'enregistrement à un serveur d'accès (RAS) éloigné.

9. Système de communication selon la revendication 8, dans lequel le dispositif (HSS) pour l'authentification et/ou l'autorisation est directement en liaison avec la fonction de commande d'état de liaison et/ou d'état de service (CSCF).

10. Système de communication selon la revendication 8 ou 9, dans lequel le dispositif (HSS) pour l'authentification et/ou l'autorisation présente une fonction de taxation.
